# EUROPÄISCHE PATENTSCHRIFT

(11) **EP 3 418 133 B1**
(45) Veröffentlichungstag und Bekanntmachung des Hinweises auf die Patenterteilung: **08.07.2020**
(21) Anmeldenummer: 18173482.3
(22) Anmeldetag: 22.05.2018
(51) Int. Cl.: B60R 25/24

(54) **VERFAHREN ZUM BETREIBEN EINER PASSIVEN FUNKBASIERTEN SCHLIESSVORRICHTUNG UND PASSIVE FUNKBASIERTE SCHLIESSVORRICHTUNG**
METHOD FOR OPERATING A PASSIVE RADIO-BASED CLOSING DEVICE AND PASSIVE RADIO-BASED CLOSING DEVICE
PROCÉDÉ DE FONCTIONNEMENT D'UN DISPOSITIF DE VERROUILLAGE RADIO PASSIF ET DISPOSITIF DE VERROUILLAGE RADIO PASSIF

(30) Priorität: 22.06.2017 DE 102017210523
(43) Veröffentlichungstag der Anmeldung: 26.12.2018
(73) Patentinhaber: VOLKSWAGEN AKTIENGESELLSCHAFT, 38440 Wolfsburg (DE)
(72) Erfinder: Schoula, Ralf, 61250 Usingen (DE); Brückner, Claus-Peter, 38104 Braunschweig (DE)

(56) Entgegenhaltungen:
- WO-A1-2015/013087
- DE-A1-102015 214 336
- US-A1- 2014 040 621

## Beschreibung

Die Erfindung betrifft ein Verfahren zum Betreiben einer passiven funkbasierten Schließvorrichtung eines Kraftfahrzeugs, das einen Schutz gegen eine unautorisierte Signalreichweitenverlängerung bereitstellt.

Passive funkbasierte Schließvorrichtungen bieten einem Nutzer eines Kraftfahrzeugs die Möglichkeit und den Vorteil, Zugangsfunktionen des Kraftfahrzeugs, beispielsweise eine Türverriegelung oder eine Startfunktion des Kraftfahrzeugs, auch ohne ein Einstecken eines Schlüssels in ein Zündschloss zur Verfügung zu stellen oder freizugeben. Insbesondere bieten sie den Vorteil, dass einem Nutzer Zugangsfunktionen auch ohne einen Knopfdruck oder ähnliche Interaktion auf einem Funkschlüssel der Schließvorrichtung zur Verfügung gestellt werden können. Ein Nachteil an funkbasierten Schließvorrichtungen ist dagegen, dass eine Sicherheitslücke darin bestehen kann, das auch unautorisierte Dritte mittels einer Signalverlängerung eines Funksignals der passiven funkbasierten Schließvorrichtung oder eines unautorisiert generierten Funksignals zum Steuern der funkbasierten Schließvorrichtung, Zugangsfunktionen des Kraftfahrzeugs nutzen können.

In der Druckschrift EP 2 193 607 B1 ist zum Schutz gegen ein Verlängern eines Funksignals einer funkbasierten Schließvorrichtung, wobei das Funksignal ein Bluetooth-Signal sein kann, ein Verfahren bereitgestellt, in dem eine Frequenz eines Signals in sehr kurzen ZeitIntervallen nach einem vordefinierten Muster verändert werden kann, wobei die Veränderung als Frequenz-Hopping bezeichnet ist. Das Muster kann dabei zwischen Sender und Empfänger einer Verbindung ausgehandelt werden, wenn die Verbindung aufgebaut wird. Im Fall, dass ein Dritter etwa zum Verlängern des Funksignals eine aktuelle Frequenz gefunden hat und verlängern könnte, ist die Frequenz des Signals schon wieder verändert, so dass der Dritte die neue Frequenz erst finden muss und dadurch ein Tracking der jeweiligen Frequenz hinter der jeweils aktuellen Frequenz liegen würde, wodurch eine erfolgreiche unautorisierte Signalverlängerung verhindert werden kann.

In der Druckschrift US 9 020 441 B2 ist beschrieben, wie ein Betreiben einer funkbasierten Schließvorrichtung dann verhindert wird, wenn eine Signallaufzeit von einem Funkschlüssel zu einem Kraftfahrzeug und zurück zum Funkschlüssel länger ist, als für eine korrespondierende Entfernung eines Funkschlüssels zu einem Kraftfahrzeug in einem normalen Betriebszustand benötigt ist. In diesem Fall ist es wahrscheinlich, dass das Funksignal mittels einer Signalverlängerung unautorisiert verlängert wurde. Für eine Signalübertragung wird ein breitbandiges Signal als Übertragungssignal in eine Vielzahl von schmalbandigen Übertragungssignalen geteilt und die schmalbandigen Übertragungssignale dann jeweils übertragen. Ein Funkschlüssel kann dabei an einem empfangenen Übertragungssignal eine Änderung vornehmen und das geänderte Signal zurück zu einem Fahrzeug schicken, wobei die Schließvorrichtung dadurch geschützt ist, dass dann, wenn ein Signalhacker ein Signal ohne diese Änderung an das Kraftfahrzeug zurückschickt, erkannt wird, dass jemand versucht eine Funkverbindung der Schließvorrichtung unautorisiert zu beeinflussen. Ein Funksignal kann dabei eine bestimmte Wellenform haben, die mit der Zeit verändert werden kann. Auch ein Frequenzspektrum oder Intervalle zwischen einzelnen schmalbandigen Signalen können verändert werden.

Aus der DE 10 2013 222 332 B4 sind ein System und ein Verfahren für von einer mobilen Vorrichtung aktivierte Fahrzeugfunktionen bekannt. Die mobile Vorrichtung kann dabei ein Mobiltelefon oder ein Smartphone sein. Eine Funkkommunikation zwischen einem Fahrzeug und der mobilen Vorrichtung kann unter Verwendung eines vordefinierten Kommunikationsprotokolls, etwa Bluetooth oder Wi-Fi erfolgen. Nachteilig ist, dass kein Schutz gegen ein mittels Signalhacking unautorisiertes Bedienen durch Dritte bereitgestellt ist.

Aus der DE 10 2012 016 251 A1 sind ein Verfahren und System zur ferngesteuerten Aktivierung mindestens einer Vorrichtung zum Entriegeln oder Verriegeln mindestens einer Tür eines Fahrzeuges bekannt. Dazu wird zwischen einer Bedieneinrichtung und dem Fahrzeug ein erstes Signal übertragen und zusätzlich zu dem ersten Signal ein weiteres Signal übertragen, wobei mittels des weiteren Signals eine Plausibilisierung des ersten Signals erfolgt. Eine Aktivierung der Vorrichtung zum Entriegeln oder Verriegeln erfolgt nur dann, falls die Plausibilisierung erfolgreich ist. Durch das weitere Signal können zum Beispiel codierte Informationen des ersten Signals vervollständigt oder ergänzt werden. Eine Plausibilisierung kann auch dann erfolgreich sein, falls eine Laufzeitdifferenz in einem vorbestimmten Bereich liegt. Das weitere Funksignal kann ein Funksignal in einem anderen Frequenzbereich als das erste Funksignal sein oder auch ein Ultraschallsignal sein.

Die DE 10 2012 220 263 A1 umfasst ein Verfahren ein Übertragen einer Challenge durch eine Basisstation an einen Transponder über eine erste Kommunikationsverbindung und ein Etablieren einer zweite Kommunikationsverbindung mit dem Transponder. Die zweite Kommunikationsverbindung ist eine kapazitive Verbindung. Das Verfahren umfasst auch ein Empfangen einer ersten Antwort auf die Challenge über die erste Kommunikationsverbindung mit dem Transponder, ein Abtasten der zweiten Kommunikationsverbindung, um ein Signal zu detektieren, das einer zweiten Antwort auf die Challenge von dem Transponder entspricht, ein Empfangen der zweiten Antwort über die zweite Kommunikationsverbindung, und ein Autorisieren des Transponders auf Basis der ersten Antwort und auf Basis der zweiten Antwort.

Die Druckschrift WO 2015/013087 A1 beschreibt eine Methode zum Vereiteln eines Zwei-Dieb-Angriffs auf ein passives RKE-System mittels eines Frequenzwechsels. Frequenzsignale werden zwischen einem Schlüsselanhänger und einem Fahrzeug übertragen. Die gesendeten Signale springen zwischen mindestens zwei Hochfrequenz-Sendekanälen, die dem Fahrzeug insbesondere als pseudozufälliges Muster bekannt sind, hin und her. An dem Fahrzeug werden die übertragenen Signale in einem Prozess empfangen, der sequentiell eingestellt wird, um die bekannten Eigenschaften jedes Abschnitts des bekannten Musters zu berücksichtigen. Anomalien im Muster der empfangenen Signale werden erkannt und wenn die Anomalien eine zulässige Schwelle überschreiten, wird ein Zugriff zu dem Fahrzeug blockiert.

Die DE 10 2016 002 302 A1 betrifft ein Schließsystem, insbesondere für die Zugangs- und/oder Fahrberechtigung bei einem Kraftfahrzeug in der Art einer Keyless Entry/Go-Funktionalität, mit einer wenigstens zwei Zustände besitzenden, als Steuereinrichtung ausgebildeten ersten Einrichtung, wie einer Steuereinrichtung zur Ent- und/oder Verriegelung der Autotüren, des Zündschlosses, der Lenkradverriegelung, zur Freigabe und/oder Sperrung der Wegfahrsperre, des Motorsteuergeräts, und mit einer zugehörigen, in der Art eines elektronischen Schlüssels, eines ID-Gebers, einer Chipkarte o. dgl. ausgebildeten zweiten Einrichtung. Die beiden Einrichtungen besitzen zu deren bestimmungsgemäßen Betrieb erste Sender und/oder Empfänger für die Übertragung von insbesondere elektromagnetischen Signalen. Insbesondere handelt es sich bei wenigstens einem der zwischen der zweiten Einrichtung und der ersten Einrichtung übertragenen Signale um ein codiertes Betriebssignal zur Authentifikation der zweiten Einrichtung, so dass nach positiver Auswertung des übertragenen Betriebssignals bei berechtigter zweiter Einrichtung eine Änderung des Zustandes der ersten Einrichtung bewirkbar ist. In der ersten Einrichtung ist ein zweiter, mit geringer Energie arbeitender Sender und/oder Empfänger vorgesehen, wobei der zweite Sender und/oder Empfänger im Polling-Modus betrieben wird. In der zweiten Einrichtung ist ein, insbesondere passiv arbeitender, Transponder, bevorzugterweise ein RFID-Tag, vorgesehen. Der bestimmungsgemäße Betrieb des ersten Senders und/oder Empfängers wird lediglich dann in der Art eines Weckens aufgenommen, wenn eine vorab erfolgende, positive Authentifikation zwischen dem Transponder sowie dem zweiten Sender und/oder Empfänger erfolgt ist.

Insbesondere wenn als Funkschlüsseleinheit einer Schließvorrichtung ein Mobilgerät, also ein Mobiltelefon oder ein Smartphone, genutzt wird, ist es nachteilig, für eine Plausibilisierung ein Ultraschallsignal zu nutzen, da ein solches von einem handelsüblichen Mobilgerät nicht generiert werden kann. Auch können aufgrund begrenzter Funktionen eines Transceivers, also einer Sende- und Empfangseinheit elektromagnetischer Funksignale, eines handelsüblichen Mobilgeräts nur Frequenzänderungen in begrenzten Bereichen von einem Mobilgerät durchgeführt werden.

Aufgabe der Erfindung ist es, unter Verwendung bereits vorhandener Funktionen eines handelsüblichen Mobilgeräts, welches als Funkschlüsseleinheit einer funkbasierten Schließvorrichtung verwendet wird, ein sicheres Betreiben der Schließvorrichtung zu gewährleisten, also einen Schutz gegen unautorisierte Signalreichweitenverlängerung bereitzustellen.

Die Aufgabe wird gelöst gemäß den unabhängigen Patentansprüchen. Vorteilhafte Weiterbildungen der Erfindung sind in den abhängigen Patentansprüchen, der folgenden Beschreibung und den Figuren beschrieben.

Die Erfindung stellt ein Verfahren bereit, das ein sicheres Betreiben einer passiven funkbasierten Schließvorrichtung eines Kraftfahrzeugs ermöglicht. Mit einem sicheren Betreiben ist ein Betreiben gemeint, das gegen eine unautorisierte Signalreichweitenverlängerung oder unautorisierte Signalgenerierung Dritter, die Signalverlängerer oder Signalhacker sein können, geschützt ist. Durch die passive funkbasierte Schließvorrichtung kann mittels zumindest zweier elektromagnetischen Funkverbindungen die nacheinander erfolgen zwischen zwei Komponenten der Schließvorrichtung, nämlich einer Funkschlüsseleinheit und dem Kraftfahrzeug oder einer durch die Schließvorrichtung ausgebildeten Schließeinrichtung des Kraftfahrzeugs, eine Zugangsfunktion des Kraftfahrzeugs freigegeben werden. Eine Zugangsfunktion kann neben einer Verriegelung oder einer Wegfahrsperre auch eine andere Fahrzeugfunktion sein, etwa eine Verriegelung eines Handschuhfachs oder eines Kofferraums. Es können durch das Verfahren auch andere Fahrzeugfunktionen gegen unautorisierten Zugriff geschützt werden. Die Funkschlüsseleinheit ist dabei ein Mobilgerät, etwa ein Mobiltelefon oder ein Smartphone. Die Funkschlüsseleinheit kann in diesem Fall mittels einer speziell dafür entwickelten App, also einem Programm für ein Mobilgerät, gesteuert werden. Für die elektromagnetischen Funkverbindungen sendet eine der Komponenten der Schließvorrichtung, also entweder die Funkschlüsseleinheit oder ein Transceiver als Schließeinrichtung am Kraftfahrzeug, jeweils je Funkverbindung zumindest ein elektromagnetisches Funksignal an die jeweils andere Komponente. Dabei wird bei einem jeweiligen Senden des Funksignals jeweils ein Parameter der Funkverbindung der Schließvorrichtung verändert, wobei das jeweilige Funksignal den jeweiligen Parameter aufweist. Der Parameter wird insbesondere in einer Weise verändert, die nur den Komponenten der passiven funkbasierten Schließvorrichtung, nicht aber einem unautorisierten Dritten bekannt ist.

Als veränderter oder veränderbarer Parameter wird erfindungsgemäß zumindest ein Identifikationsmerkmal zumindest zweier unterschiedlicher Datenkommunikationsschnittstellen verändert. Ein Schließvorgang beinhaltet also zumindest zwei Funkverbindungen, die über zumindest zwei, vorzugsweise mehrere Funkverbindungen laufen, erfolgen. Die Veränderung erfolgt zeitlich vor einer Freigabe einer jeweiligen Zugangsfunktion des Kraftfahrzeugs. Sie kann also auch bereits vor einem Schließvorgang und einer mit dem Schließvorgang korrespondierenden Funkverbindung erfolgen. Ein Identifikationsmerkmal einer der Datenkommunikationsschnittstellen ist ein solches Merkmal, mit dem sich jeweils eine der Komponenten bei der anderen Komponente der Schließvorrichtung identifiziert. Eine Datenkommunikationsschnittstelle ist eine jeweils an einer Komponente bereitgestellte Funkschnittstelle mittels derer eine Funkverbindung zwischen den Komponenten der Schließvorrichtung aufgebaut wird. Eine Datenkommunikationsschnittstelle kann einen vordefinierten Funkstandard erfüllen. Durch eine Veränderung des Identifikationsmerkmals wird dieses jeweils auf einen aktuellen Wert gesetzt. Eine Freigabe der Zugangsfunktion des Kraftfahrzeugs erfolgt nur dann, falls das jeweilige Identifikationsmerkmal den jeweils aktuellen Wert aufweist. Das bedeutet, wenn eine Veränderung beispielsweise einmal vor der Funkverbindung gemacht wird, muss zumindest der korrespondierende aktuelle Wert vorliegen. Es ist vorzugsweise vorgesehen, dass in mehreren Funkverbindungen mit mehreren Funksignalen, d.h. insbesondere mehr als zwei Funkverbindungen eines Schließvorgangs mehrmals das Identifikationsmerkmal verändert wird. In diesem Fall muss das Identifikationsmerkmal jeder der mehreren Funkverbindungen jeweils den zur jeweiligen Funkverbindung korrespondierenden aktuellen Wert aufweisen. Vorzugsweise werden dazu mehrere verschiedenartige Datenkommunikationsschnittstellen verwendet, die nacheinander und/oder gleichzeitig genutzt werden.

Das bedeutet beispielsweise, dass die Funkschlüsseleinheit vor jedem Senden eines elektromagnetischen Funksignals an das Kraftfahrzeug ihr jeweiliges Identifikationsmerkmal verändert. Das Kraftfahrzeug kennt einen jeweils aktuellen Wert des Identifikationsmerkmals einer Funkverbindung, beispielsweise dadurch, dass dieses anhand einer vorbestimmten Tabelle geändert wird. In einer ersten Funkverbindung kann das Identifikationsmerkmal zum Beispiel einen ersten Wert aufweisen, der einem ersten Wert der Tabelle oder überhaupt einem in der vorbestimmten Tabelle gespeicherten Wert entspricht, und dadurch eine jeweilige Zugangsfunktion des Kraftfahrzeugs freigegeben werden. In einer zweiten Funkverbindung wird das Identifikationsmerkmal auf einen zweiten Wert verändert, was dem Kraftfahrzeug z.B. durch einen zweiten Wert der vorbestimmten Tabelle bekannt ist, sodass das Kraftfahrzeug bei der zweiten Verbindung die jeweilige Zugangsfunktion nur dann freigibt, wenn ein jeweiliges Funksignal das Identifikationsmerkmal mit dem zweiten Wert aufweist. Ein jeweiliges Identifikationsmerkmal kann auch mittels eines Fahrzeugkommunikationsnetzwerkes, beispielsweise eines CAN- oder eines LIN-Netzwerkes, der jeweiligen Datenkommunikationsschnittstelle bekannt gemacht werden, wobei ein an das Fahrzeugkommunikationsnetzwerk angeschlossener Bordcomputer die vorbestimmte Tabelle aufweisen kann oder in einer zusätzlichen vorangehenden, verschlüsselten Funkverbindung mit einer der Komponenten das jeweilige Identifikationsmerkmal einer Funkverbindung aushandelt oder bestimmt. Es kann auch eine andere Steuereinheit als ein Bordcomputer verwendet werden, z.B. ein Steuergerät des Kraftfahrzeugs.

Der Vorteil, der sich dadurch ergibt ist insbesondere, dass auch dann, wenn ein Signalhacker ein Funksignal einer ersten Funkverbindung empfängt, er kein Funksignal zur Freigabe einer Zugangsfunktion des Kraftfahrzeugs verlängern oder generieren kann, da er versuchen würde, ein zweites Funksignal mit dem ersten Identifikationsmerkmal, dass er aus der ersten Funkverbindung erkannt hat, zu verlängern oder zu generieren. In diesem Fall aber wird eine Zugangsfunktion des Kraftfahrzeugs nicht freigegeben, beziehungsweise ein Signal mit dem ersten Identifikationsmerkmal ist nicht mehr zum Verlängern verfügbar. Eine Signalverlängerung des zweiten Funksignals ist nur mit sehr geringer Wahrscheinlichkeit möglich, da ein Signalverlängerer zum Verlängern eines Funksignals nach einem Funksignal mit einem dem Signalverlängerer höchstens bekannten ersten Identifikationsmerkmal sucht. Der Signalverlängerer kann durch die Erfindung also sogar vom relevanten Funksignal abgelenkt werden. Wenn also bei jeder Funkverbindung der Schließvorrichtung das Identifikationsmerkmal verändert wird, weiß ein Signalverlängerer nicht, welches Funksignal er zur Freigabe einer Zugangsfunktion des Kraftfahrzeugs verlängern muss oder sucht nach einem Funksignal, das es gar nicht gibt. Dies ist insbesondere dann von Vorteil, wenn eine Vielzahl von Funksignalen um das Kraftfahrzeug herum vorhanden ist, was insbesondere dann der Fall ist, wenn mehrere Kraftfahrzeuge und mehrere Mobilgeräte im Bereich des Kraftfahrzeugs vorhanden sind. Durch das jeweilige Verändern des Identifikationsmerkmals wird also eine Sicherheit gegen eine Manipulation der Schließvorrichtung erhöht.

Zur Erfindung gehören auch Weiterbildungen des Verfahrens, durch die sich weitere Vorteile ergeben.

In einer Weiterbildung wird als Datenkommunikationsschnittstelle je eine WLAN-Schnittstelle und/oder eine Bluetooth-Schnittstelle des Mobilgeräts und des Kraftfahrzeugs verwendet. Der Vorteil daran ist, dass somit bereits vorhandene Datenkommunikationsschnittstellen des Mobilgeräts wie auch des Kraftfahrzeugs verwendet werden, da handelsübliche Mobilgeräte und die meisten Kraftfahrzeuge sowohl über eine WLAN-Schnittstelle als auch über eine Bluetooth-Schnittstelle verfügen. Das Verfahren wird also für Kraftfahrzeuge angewendet, die zumindest über eine der beiden genannten Schnittstellen verfügen. Vorzugsweise wird sowohl die WLAN-Schnittstelle als auch die Bluetooth-Schnittstelle in einem Schließvorgang mit insgesamt mindestens zwei Funkverbindungen genutzt, und jeweils bei beiden Datenkommunikationsschnittstellen das Identifikationsmerkmal zumindest vor jedem Schließvorgang einmal verändert. Eine Zugangsfunktion des Kraftfahrzeugs erfolgt also nur dann, wenn sowohl das Identifikationsmerkmal einer WLAN-Verbindung als auch das Identifikationsmerkmal einer Bluetooth-Verbindung in dem Schließvorgang jeweils den aktuellen Wert aufweisen. Der Vorteil daraus ist, dass insbesondere ein Signalverlängerer erstens die Schwierigkeit hat, dass er zwei verschiedene Arten eines elektromagnetischen Signals, nämlich ein WLAN- und ein Bluetooth-Signal, verlängern muss und zweitens die Schwierigkeit hat, dass er bei beiden elektromagnetischen Signalen dadurch, dass er das aktuelle Identifikationsmerkmal nicht kennt, nicht weiß, welches der Signale aus einer Umgebung der Schließvorrichtung mit einer Vielzahl von derartigen elektromagnetischen Funksignalen er verlängern muss. Da ein WLAN- und/oder Bluetooth-Signal verwendet wird ist in einer üblichen Umgebung wie einer Stadt oder einem Parkplatz mit einer Vielzahl solcher Signale zu rechnen, da eine Vielzahl von Mobilgeräten in solchen Umgebungen jeweilige Funkverbindungen aufbauen. Es können auch zwei oder mehrere verschiedene WLAN-Schnittstellen verwendet werden, die etwa je unterschiedliche WLAN-Standards nutzen.

Eine Weiterbildung sieht vor, dass die verschiedenen Datenkommunikationsschnittstellen nacheinander in einer vorbestimmten Reihenfolge genutzt werden. Es werden also in einem Schließvorgang mehrere verschiedene Funkverbindungen nacheinander genutzt, wobei die Reihenfolge einem unautorisierten Dritten nicht bekannt ist. Es kann also bei beispielsweise drei vorhandenen Datenkommunikationsschnittstellen a), b), und c) eine Reihenfolge durch ein Abwechseln und/oder Wiederholen einzelner dieser Datenkommunikationsschnittstellen a), b) und c) gewählt werden, etwa a) - c) - c) - b) - a) - b) oder eine andere vorbestimmte und/oder zwischen den Komponenten verhandelbare Reihenfolge. Durch das Wechseln des Funkstandards durch den Wechsel der Datenkommunikationsschnittstellen mit gleichzeitigem Wechsel des jeweiligen Identifikationsmerkmals ist ein Signalreichweitenverlängern besonders erschwert. Weiterhin können auch die Funkverbindungen über a) und b) nacheinander erfolgen und die Funkverbindung über c) je gleichzeitig mit einer Funkverbindung über a) oder b) erfolgen. Dies bietet den Vorteil, dass ein Signalverlängerer gleichzeitig Funksignale verschiedener Funkstandards verlängern müsste, was nur sehr schwierig möglich ist und somit die Sicherheit erhöht wird.

In einer Weiterbildung wird das Identifikationsmerkmal für jede elektromagnetische Funkverbindung jeweils verändert. Die Funkverbindungen erfolgen dabei zeitlich versetzt in einem vorbestimmten Muster. Beispielsweise kann vorgesehen sein, dass zwei Bluetooth-Verbindungen aufgebaut werden, danach eine Pause für eine vorbestimmte Zeitdauer, z.B. 50 ms, auftritt und danach zwei WLAN-Verbindungen aufgebaut werden. Genauso sind verschiedene andere Reihenfolgen der Funkverbindungen mittels der jeweiligen Datenkommunikationsschnittstellen in verschiedenen anderen zeitlichen Abfolgen mit jeweils vorbestimmten Zeitdauern der Funkverbindungen und jeweils vorbestimmten Zeitdauern zwischen den Funkverbindungen als Pausen möglich. Da in jeder der Funkverbindungen das jeweilige Identifikationsmerkmal verändert ist, ist es besonders schwierig, die relevanten Funksignale zu verlängern. Jede der Funkverbindungen weist dabei ein jeweils unterschiedliches Identifikationsmerkmal auf. Es kann beispielsweise in einer ersten WLAN-Verbindung ein Funksignal mit einem ersten Identifikationsmerkmal gesendet werden und in einer zeitlich versetzten zweiten Funkverbindung ein Funksignal mit einem zweiten Identifikationsmerkmal gesendet werden. Eine Freigabe einer Zugangsfunktion des Kraftfahrzeugs erfolgt nur dann, wenn sowohl das erste Funksignal mit dem ersten Identifikationsmerkmal als auch das zweite Funksignal mit dem zweiten Identifikationsmerkmal empfangen werden. Statt der WLAN-Verbindung kann auch eine Bluetooth-Verbindung verwendet werden, oder sowohl eine WLAN Verbindung als auch eine Bluetooth-Verbindung verwendet werden. Vorzugsweise können auch mehr als zwei Funkverbindungen verwendet werden, wobei dann bei jeder Funkverbindung eine jeweilige Veränderung des Identifikationsmerkmals geschieht und für eine Freigabe der Zugangsfunktion bei jedem der Funksignale jeweils das Identifikationsmerkmal den jeweils relevanten aktuellen Wert aufweisen muss. Es ist auch vorgesehen, dass je Datenkommunikationsschnittstelle je ein unterschiedliches Identifikationsmerkmal geändert werden kann. Durch die Weiterbildung wird die Sicherheit des Betreibens der Vorrichtung weiter erhöht.

Eine Weiterbildung des Verfahrens sieht vor, dass als jeweiliges Identifikationsmerkmal je eine IP-Adresse und/oder eine MAC-Adresse verwendet werden. Eine IP-Adresse ist eine Adresse in Computernetzen, die auf dem Internetprotokoll (IP) basiert. Sie wird Geräten zugewiesen, die an das Computernetz angebunden sind, und macht die Geräte somit identifizierbar. Eine MAC-Adresse (Media-Access-Control-Adresse, auch Ethernet-ID, Wi-Fi-Adresse oder Physikalische Adresse genannt) ist eine veränderbare Hardware-Adresse eines Netzwerkadapters, die ebenso als eindeutiger Identifikator des Geräts in einem Computernetz dient. Eine Funkverbindung zwischen dem Mobilgerät, das als Funkschlüsseleinheit genutzt wird, und dem Kraftfahrzeug kann insbesondere, wenn es sich um eine WLAN-Verbindung handelt, als Computernetz gesehen werden. Zumindest verfügt ein Mobilgerät, das für eine Steuerung eines Schließvorgangs der Schließvorrichtung genutzt werden kann, standardmäßig über eine IP-Adresse und eine MAC-Adresse, die verwendet werden können und somit in effizienter Wiederbenutzung auch in der Schließvorrichtung genutzt werden können. Der Vorteil ist, dass als Identifikationsmerkmal also bereits vorhandene Merkmale der Funkverbindung genutzt werden. Vor allem, da normalerweise eine Vielzahl von Mobilgeräten mit einer Vielzahl von Funkverbindungen, beispielsweise WLAN-Verbindungen oder Bluetooth-Verbindungen, um das Kraftfahrzeug herum von einer Vielzahl anderer Nutzer verwendet werden, die jeweils verschiedene IP-Adressen und MAC-Adressen aufweisen, kann ein Signalverlängerer das relevante, für den Schließvorgang genutzte Funksignal in einem Umgebungs-Signalrauschen nicht identifizieren und somit auch nicht verlängern, da bei diesem jeweils bei jedem Schließvorgang durch Verändern des Identifikationsmerkmals die IP-Adresse oder die MAC-Adresse verändert werden und somit aus dem Umgebungs-Signalrauschen kein wiederkehrendes Muster bei verschiedenen Schließvorgängen erkennbar ist.

In einer Weiterbildung des Verfahrens ist vorgesehen, dass eine Veränderung des Identifikationsmerkmals der jeweils anderen Komponente in einem verschlüsselten Funksignal bekannt gemacht wird. Der Vorteil daran ist, dass ein Identifikationsmerkmal jeweils auf einen beliebigen, zwischen den Komponenten verhandelbaren aktuellen Wert gesetzt werden kann und somit insbesondere eine Tabelle mit vorbestimmten Änderungen des Identifikationsmerkmals eingespart werden kann. Das Funksignal weist dabei jeweils das veränderte Identifikationsmerkmal in einer verschlüsselten Information auf, sodass auch bei einem Abhören dieses Funksignals das jeweils veränderte Identifikationsmerkmal einem unautorisierten Dritten nicht bekannt werden kann. Das Funksignal kann zum Beispiel jeweils das Funksignal eines vorangegangenen Schließvorgangs, also eines Schließvorgangs für eine vorangegangene Freigabe einer Zugangsfunktion sein oder ein zusätzliches Funksignal innerhalb eines jeweils aktuellen Schließvorgangs sein. Beispielsweise kann eine Komponente zunächst ein verschlüsseltes Funksignal mit einem ersten Identifikationsmerkmal, dass dem aktuellen Wert entspricht, an die jeweils andere Komponente der Schließvorrichtung senden, worin der anderen Komponente eine nächste Veränderung des Identifikationsmerkmals mitgeteilt wird, und in einem zweiten Funksignal mit dem dann relevanten aktuellen Identifikationsmerkmal eine Anforderung zur Freigabe einer Zugangsfunktion senden. Auch wenn es einem Signalverlängerer gelingen sollte, das erste Funksignal zu identifizieren, weiß er nicht, welches Funksignal er tatsächlich für die Freigabe der Zugangsfunktion verlängern müsste, da dieses das zweite Identifikationsmerkmal aufweist.

Eine Weiterbildung sieht vor, dass zusätzlich zum veränderten Identifikationsmerkmal als weitere Parameter eine Senderleistung und/oder eine Sendefrequenz der Funkverbindung verändert werden. Beispielsweise kann eine erste Bluetooth-Verbindung mit einer ersten Sendeleistung aufgebaut werden und eine zweite Bluetooth-Verbindung mit einer verringerten Sendeleistung, die um einen vorbestimmten Wert verringert ist, etwa um die Hälfte der ersten Sendeleistung, verwendet werden. Eine Freigabe einer Zugangsfunktion erfolgt nur dann, wenn die zweite Funkverbindung die vorbestimmte zweite Sendeleistung aufweist. Es ist auch möglich, dass beispielsweise eine erste Bluetooth-Verbindung bei einer ersten Bluetooth-Frequenz und eine zweite Bluetooth-Verbindung bei einer zweiten Bluetooth-Frequenz aufgebaut wird. Dies ist insbesondere möglich, da das standardisierte Bluetooth-Protokoll verschiedene Sendefrequenzen bereitstellt. Eine Zugangsfunktion des Kraftfahrzeugs wird nur dann freigegeben, wenn eine Reihenfolge der Funkverbindungen mit jeweils vorbestimmten Sendefrequenzen von der jeweils empfangenen Komponente der Schließvorrichtung empfangen wird. Es ist auch möglich, dass eine Empfängerempfindlichkeit einer der Komponenten zum Beispiel durch eine Hardwareeinstellung oder eine Softwareeinstellung veränderlich ist.

Eine Weiterbildung sieht vor, dass über zumindest eine Datenkommunikationsschnittstelle der Schließvorrichtung weitere Funkverbindungen aufgebaut werden, die unabhängig von einer Funkverbindung zur Freigabe einer Zugangsfunktion des Kraftfahrzeugs sind. Damit ist gemeint, dass beispielsweise das Mobilgerät an ein anderes Gerät als das Kraftfahrzeug ein Funksignal sendet, wobei das Funksignal über die gleiche Datenkommunikationsschnittstelle gesendet wird wie ein Funksignal, das zum Kraftfahrzeug gesendet wird. Der Vorteil daran ist, dass ein potentieller Signalverlängerer nicht weiß, welches der Sendesignale des Mobilgerätes er zum Freigeben einer Zugangsfunktion des Kraftfahrzeugs verlängern muss, vor allem da jeweils das Identifikationsmerkmal des Mobilgerätes beziehungsweise der Funkverbindung des Mobilgerätes verändert wird. Dadurch wird eine Sicherheit der Schließvorrichtung erhöht. Es kann auch sein, dass beispielsweise im Kraftfahrzeug selbst mehrere Datenkommunikationsschnittstellen in derselben Art, zum Beispiel bei Bluetooth-Schnittstellen bereitgestellt sind. In diesem Fall kann das Kraftfahrzeug ein Funksignal von der ersten zur zweiten Bluetooth-Schnittstelle senden und somit Umgebungsfunksignale generieren, die nicht zur Funkverbindung des Schließvorgangs gehören. Insbesondere wenn bei jedem solchen unabhängigen Funksignal jeweils ein Identifikationsmerkmal verändert wird, wird die Anzahl an Umgebungsfunksignalen, die in einer Umgebung der Schließvorrichtung vorhanden sind, erhöht, so das ein Dritter nicht herausfinden kann, welches der Funksignale mit welchem Identifikationsmerkmal tatsächlich zu einer Funkverbindung gehören, die eine Zugangsfunktion des Kraftfahrzeugs freigeben kann.

In einer Weiterbildung wird eine jeweilige Datenkommunikationsschnittstelle dazu genutzt, eine Entfernung und/oder eine Position der Funkschlüsseleinheit zum Kraftfahrzeug zu ermitteln. Dazu wird eine Empfangsfeldstärkemessung und/oder eine Laufzeitmessung verwendet. Eine Laufzeitmessung ermittelt beispielsweise, wie lange ein Funksignal vom Kraftfahrzeug zum Funkschlüssel und wieder zurück benötigt, wobei aus dieser Signallaufzeit eine Entfernung zwischen Funkschlüsseleinheit und Kraftfahrzeug ermittelt werden kann. Eine Freigabe der Zugangsfunktion erfolgt nur dann, falls die jeweilige Entfernung innerhalb eines vorbestimmten Bereiches liegt. Falls dagegen eine Signalverlängerung vorliegt, ist eine jeweilige Signallaufzeit höher und damit eine ermittelte Entfernung nicht mehr innerhalb des vorbestimmten Bereiches, sodass eine Zugangsfunktion nicht freigegeben wird. Der Vorteil an dieser Weiterbildung ist, dass zusätzlich zum Sicherheitsmerkmal des verwendeten Identifikationsmerkmals einer Funkverbindung geprüft wird, ob sich die Funkschlüsseleinheit tatsächlich innerhalb einer vorbestimmten Entfernung zum Kraftfahrzeug befindet oder ob eine Signalverlängerungen vorliegt.

Zur Erfindung gehört auch eine passive funkbasierte Schließvorrichtung eines Kraftfahrzeugs mit zumindest zwei Funkschnittstellen. Die Funkschnittstellen sind dazu ausgestaltet, mindestens zwei elektromagnetische Funkverbindungen zu einem Mobilgerät aufbauen zu können, wobei das jeweilige Mobilgerät als Funkschlüsseleinheit verwendet wird. Eine Funkschnittstelle kann eine WLAN-Schnittstelle oder eine Bluetooth-Schnittstelle sein. Das jeweilige Mobilgerät verfügt ebenfalls über derartige jeweilige Funkschnittstellen und ist dazu ausgestaltet in einem Schließvorgang zumindest eine Zugangsfunktion eines Kraftfahrzeugs mit der Schließvorrichtung freizugeben. Die passive Schließvorrichtung ist so ausgestaltet, dass sie jeweils bei einer Funkverbindung ein fahrzeugseitiges Identifikationsmerkmal der Funkverbindung verändert, wobei das Identifikationsmerkmal beispielsweise eine IP-Adresse oder eine MAC-Adresse sein kann, die je auf einen aktuellen Wert gesetzt wird. Die Schließvorrichtung ist auch dazu ausgestaltet, jeweils vorbestimmte oder ausgehandelte aktuelle Werte eines Identifikationsmerkmals des Mobilgeräts zu kennen, beispielsweise durch ein verschlüsseltes Funksignal des Mobilgeräts, und eine Zugangsvorrichtung des Kraftfahrzeugs nur dann freizugeben, falls ein jeweiliges empfangenes Funksignal vom Mobilgerät ein jeweiliges Identifikationsmerkmal mit einem jeweils aktuellen Wert aufweist. Die Schließvorrichtung ist also dazu ausgestaltet, das vorher beschriebene Verfahren auszuführen.

Zu der Erfindung gehören auch Weiterbildungen der erfindungsgemäßen Schließvorrichtung, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Schließvorrichtung hier nicht noch einmal beschrieben.

Im Folgenden ist ein Ausführungsbeispiel der Erfindung beschrieben. Hierzu zeigt:
- Fig. 1: eine schematische Darstellung eines Kraftfahrzeugs mit einer Schließvorrichtung und ein Mobilgerät; und
- Fig. 2: eine schematische Darstellung eines möglichen Ablaufs des erfindungsgemäßen Verfahrens.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

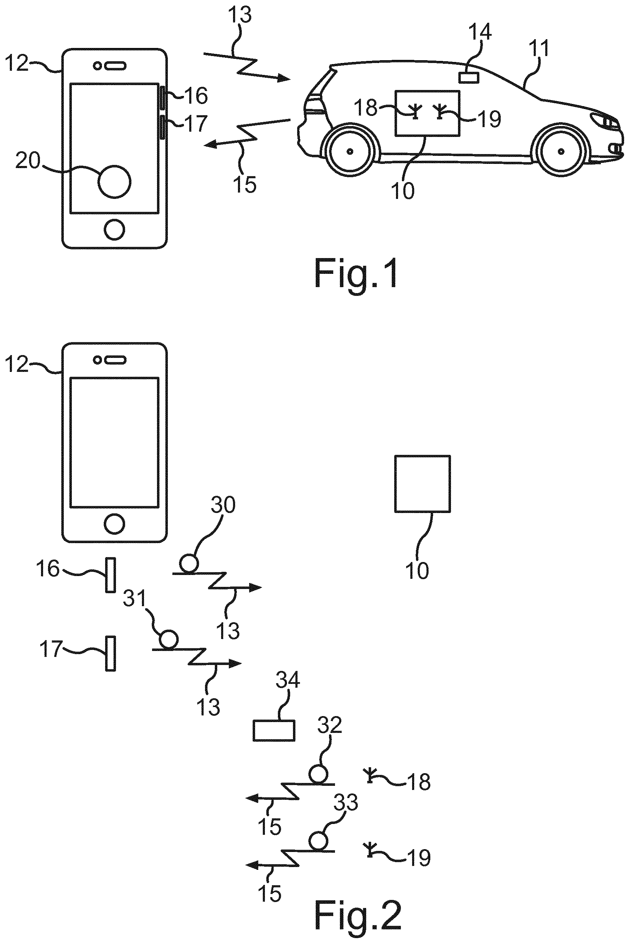

In Fig. 1 ist eine funkbasierte Schließvorrichtung 10 eines Kraftfahrzeugs 11 dargestellt. Für eine Funkverbindung zwischen einem Mobilgerät 12 und der Schließvorrichtung 10 kann das Mobilgerät 12 ein elektromagnetisches Funksignal 13 an einen Transceiver 14 des Kraftfahrzeugs 11 senden oder ein elektromagnetisches Funksignal 15 vom Transceiver 14 empfangen. Dazu weist das Mobilgerät eine erste Datenkommunikationsschnittstelle 16 und eine zweite Datenkommunikationsschnittstelle 17 auf und die Schließvorrichtung eine erste Datenkommunikationsschnittstelle 18 und eine zweite Datenkommunikationsschnittstelle 19. Das Funksignal 13 kann beispielsweise vom Mobilgerät 12 gesendet werden, wenn eine Bedienhandlung am Kraftfahrzeug 11 erfolgt (z.B. eine Berührung eines Türgriffs, die mittels eines Berührungssensors erfasst werden kann) oder wenn eine Annäherung des Mobilgerätes 12 an das Kraftfahrzeug 11 erkannt wird.

In Fig. 2 sind das Mobilgerät 12 und die Schließvorrichtung 10 gezeigt. Die Datenkommunikationsschnittstelle 16 erzeugt ein Funksignal 13 mit einem Identifikationsmerkmal 30, die Datenkommunikationsschnittstelle 17 erzeugt ein Funksignal 13 mit einem Identifikationsmerkmal 31, die Datenkommunikationsschnittstelle 18 erzeugt ein Funksignal 15 mit einem Identifikationsmerkmal 32 und die Datenkommunikationsschnittstelle 19 erzeugt ein Funksignal 15 mit einem Identifikationsmerkmal 33. Weiterhin ist in Fig. 2 eine vorbestimmte Zeitdauer 34 dargestellt.

In einem Ausführungsbeispiel sind die Datenkommunikationsschnittstellen 16 und 18 je eine WLAN-Schnittstelle und die Datenkommunikationsschnittstellen 17 und 19 je eine Bluetooth-Schnittstelle. Das Mobilgerät 12 ist in diesem Fall als passiver Funkschlüssel ausgestaltet, so dass ein Nutzer eine Zugangsfunktion des Kraftfahrzeugs 11 bedienen kann, ohne das Mobilgerät 12 selbst zu bedienen. Dazu sendet die Schließvorrichtung 10 ein erstes Funksignal 15 mit dem Identifikationsmerkmal 32 an das Mobilgerät 12. Das Identifikationsmerkmal 32 ist im Gegensatz zu einem Identifikationsmerkmal eines vorherigen Schließvorgangs verändert, d.h. der aktuelle Wert wird bei dem beschriebenen Schließvorgang im Ausführungsbeispiel zum ersten Mal verwendet. Das Mobilgerät 12 kennt den aktuellen Wert des Identifikationsmerkmals 32 aus einem vorangehenden verschlüsselten Funksignal des Kraftfahrzeugs und kann es daher identifizieren und empfangen. Das Identifikationsmerkmal 32 kann eine IP-Adresse der Schließvorrichtung 10 oder des Kraftfahrzeugs 11 sein. Damit eine Zugangsfunktion des Kraftfahrzeugs 11 freigegeben werden kann, sendet das Mobilgerät 12 über die Datenkommunikationsschnittstelle 16 ein Funksignal 13 mit einem Identifikationsmerkmal 30, dessen aktueller Wert der Schließvorrichtung 10 auf die oben beschriebene Weise bekannt ist. Daraufhin wird das Verfahren beispielsweise um eine vorbestimmte Zeitdauer 34 pausiert, wobei diese vorbestimmte Zeitdauer 34 so kurz ist, dass ein Nutzer des Kraftfahrzeugs sie nicht bemerkt. Sie ist dazu beispielsweise 100 ms lang. Danach wird ein Funksignal 15 von der anderen Datenkommunikationsschnittstelle 19, die in diesem Ausführungsbeispiel keine WLAN-Schnittstelle sondern eine Bluetooth-Schnittstelle ist, mit einem Identifikationsmerkmal 33 an das Mobilgerät 12 gesendet, wobei das Mobilgerät 12 wiederum den aktuellen Wert des Identifikationsmerkmal 33 kennt. Nachdem das Mobilgerät 12 dieses Funksignal 15 empfangen hat sendet es wiederum ein Antwortsignal 13 an die Schließvorrichtung 10, wobei das Antwortsignal 13 das Identifikationsmerkmal 31 aufweist, welches der Schließvorrichtung 10 bekannt ist. Erst wenn alle Signale mit den dazugehörigen Identifikationsmerkmalen gesendet oder empfangen wurden wird die Zugangsfunktion des Kraftfahrzeugs freigegeben. In diesem Beispiel ist gezeigt wie eine jeweilige Funkverbindung mit einem dazugehörigen Funksignal 13, 15 jeweils ein unterschiedliches Identifikationsmerkmal 30, 31, 32, 33 aufweist. Dadurch, dass während des Verfahrens eine Pause um eine vorbestimmte Zeitdauer 34 auftritt, kann insbesondere ein unautorisierter Dritter nicht erkennen, dass es sich bei den jeweiligen Funksignalen um zusammengehörende Funksignale eines Schließvorgangs der Schließvorrichtung 10 handelt. Dadurch ist das Freigeben einer Zugangsfunktion des Kraftfahrzeugs 11 sicher gegen unautorisierte Dritte, da dieser die jeweiligen Signale nicht manipulieren kann. Vorzugsweise wird die beschriebene Reihenfolge der Funkverbindungen oder dazwischenliegender Pausen bei jedem Schließvorgang geändert.

In einem weiteren Ausführungsbeispiel sind beide Datenkommunikationsschnittstellen 16 und 17 je als WLAN-Schnittstelle ausgestaltet. Das Mobilgerät 12 ist dabei ein Funkschlüssel, der das Funksignal 13 mit dem Identifikationsmerkmal 30 an die Schließvorrichtung 10 sendet. Die Schließvorrichtung 10 kennt dabei das aktuelle Identifikationsmerkmal 30 bzw. dessen aktuellen Wert. Nach dem Senden des ersten Funksignals 13 sendet das Mobilgerät 12 ein zweites Funksignal 13 mit einem Identifikationsmerkmal 31 an die Schließvorrichtung 10. Die Schließvorrichtung 10 kennt das nun aktuelle Identifikationsmerkmal 31 bzw. dessen aktuellen Wert dadurch, dass dieser bereits als verschlüsselte Information im ersten Funksignal 13 mit dem Identifikationsmerkmal 30 an die Schließvorrichtung 10 gesendet wurde. Erst nachdem auch das zweite Funksignal mit dem Identifikationsmerkmal 31 erfolgreich identifiziert und empfangen wurde, wird eine Zugangsfunktion des Kraftfahrzeugs freigegeben. Durch das Ausführungsbeispiel ist beispielhaft mit einer Kommunikationsschnittstelle gezeigt, wie prinzipiell auch mit verschiedenen Datenkommunikationsschnittstellen und mehreren Funksignalen 13, 15 jeweils aktuelle Werte eines Identifikationsmerkmal einer jeweils anderen Komponente der Schließvorrichtung bekannt gemacht werden können.

Durch die Erfindung wird eine Abwehr von Signalverlängerungen oder Relay-Station-Attacken für virtuelle Schlüssel in Mobilgeräten mit Bluetooth und/oder WLAN zur Verfügung gestellt. Teils bekannte Abwehrmöglichkeiten können in Mobilgeräten nicht eingesetzt werden, da diese standardmäßig nur bestimmte Technologien bereitstellen. Im Verfahren wird eine Kommunikation zwischen dem Mobilgerät und dem Kraftfahrzeug auf mehrere Kommunikationsverbindungen, also Datenkommunikationsschnittstellen, in einer vorbestimmten, einem Angreifer nicht bekannten Reihenfolge, verteilt, was einen Angriff maßgeblich erschwert. Dazu werden in Mobiltelefonen standardmäßig vorhandene Funkstandards verwendet, was einen Kostenvorteil zur Folge hat. Zur Abwehr gegen Relay-Station-Attacken wird eine, vorzugsweise mehr als eine Datenkommunikationsschnittstelle im Fahrzeug, die mit dem als Fahrzeugschlüssel genutzten Mobilgerät über jeweils eine Funkverbindung kommuniziert in einer vorbestimmten Weise, die einem Angreifer nicht bekannt ist, verändert, z.B. durch Änderung eines Identifikationsmerkmals und/oder einer physikalischen Signaleigenschaft. Dadurch können Relay-Station-Attacken zumindest deutlich erschwert werden. Als zusätzlicher Schutz können Datenkommunikationsschnittstellen auch dazu genutzt werden, eine Entfernung und/oder Position des Mobilgerätes relativ zum Kraftfahrzeug zu bestimmen. Dies ist zum Beispiel über eine Abstandsmessung durch Messungen der Empfangsfeldstärken, Phasenmessung zur Abstandsbestimmung, Phasenmessung zur Winkelbestimmung, Laufzeitmessung, Triangulation der Abstände und/oder Winkelbestimmungen zur Lokalisierung des Mobilgerätes möglich.

Insgesamt zeigt das Beispiel, wie durch die Erfindung ein Betrieb einer funkbasierten Schließvorrichtung eines Kraftfahrzeugs dadurch vor Manipulation geschützt wird, dass in jeder Funkverbindung ein verändertes Identifikationsmerkmal genutzt wird, das einem Dritten nicht bekannt ist und durch regelmäßiges Verändern nicht bekannt werden kann, wodurch er das relevante Funksignal zur Freigabe einer Zugangsfunktion des Kraftfahrzeugs nicht erkennen und daher nicht verlängern oder ein gefälschtes Funksignal generieren kann.

**Bezugszeichenliste**

| | |
|---|---|
| Schließvorrichtung | (10) |
| Kraftfahrzeug | (11) |
| Mobilgerät | (12) |
| Funksignal | (13) |
| Transceiver | (14) |
| Funksignal | (15) |
| Datenkommunikationsschnittstelle | (16) |
| Datenkommunikationsschnittstelle | (17) |
| Datenkommunikationsschnittstelle | (18) |
| Datenkommunikationsschnittstelle | (19) |
| Knopf | (20) |
| Identifikationsmerkmal | (30) |
| Identifikationsmerkmal | (31) |
| Identifikationsmerkmal | (32) |
| Identifikationsmerkmal | (33) |
| Zeitdauer | (34) |

## Patentansprüche

1. Verfahren zum Betreiben einer passiven funkbasierten, mittels zumindest zweier elektromagnetischer Funkverbindungen betriebenen Schließvorrichtung (10) eines Kraftfahrzeugs (11), durch die zumindest eine Zugangsfunktion des Kraftfahrzeugs (11) freigegeben werden kann, wobei die passive funkbasierte Schließvorrichtung (10) als Komponenten zumindest ein als Funkschlüsseleinheit ausgestaltetes Mobilgerät (12) und zumindest zwei Datenkommunikationsschnittstellen (18, 19) der Schließvorrichtung (10) am Kraftfahrzeug (11) aufweist, zwischen denen für die zumindest zwei elektromagnetischen Funkverbindungen zumindest zwei elektromagnetische Funksignale (13, 15) ausgetauscht werden, und für das Betreiben zumindest ein Parameter der zumindest zwei Funkverbindungen der Schließvorrichtung (10) in einer vorbestimmten, einem Dritten unbekannten Weise verändert wird, wobei als Parameter zeitlich vor einer Freigabe der Zugangsfunktion zumindest je ein Identifikationsmerkmal (30) zumindest zweier unterschiedlicher Datenkommunikationsschnittstellen (16) zum Verbindungsaufbau der Funkverbindungen, die nacheinander erfolgen, an der zumindest einen Funkschlüsseleinheit (12) und/oder an den zumindest zwei Datenkommunikationsschnittstellen (18, 19) verändert und dazu je auf einen aktuellen Wert gesetzt wird, und die Freigabe der Zugangsfunktion nur dann erfolgt, falls das jeweilige Identifikationsmerkmal (30) zumindest den aktuellen Wert aufweist, wobei während eines Schließvorgangs die zumindest zwei verschiedenen Datenkommunikationsschnittstellen (16, 17) zum Aufbau von zumindest zwei verschiedenen elektromagnetischen Funkverbindungen verwendet werden und die zumindest zwei bezüglich ihres Identifikationsmerkmals (30, 31) verschiedenen elektromagnetischen Funkverbindungen in einem vorbestimmten Muster zeitlich versetzt erfolgen und/oder je Datenkommunikationsschnittstelle je ein unterschiedliches Identifikationsmerkmal genutzt wird.

2. Verfahren nach Anspruch 1, wobei als Datenkommunikationsschnittstellen (16) je eine WLAN-Schnittstelle und/oder je eine Bluetooth-Schnittstelle des Mobilgeräts (12) und des Kraftfahrzeugs (11) verwendet werden.

3. Verfahren nach einem der vorhergehenden Ansprüche, wobei die zumindest zwei Funkverbindungen je nacheinander in einer vorbestimmten Reihenfolge über die zumindest zwei unterschiedlichen Datenkommunikationsschnittstellen (16) aufgebaut werden oder zusätzlich gleichzeitig eine weitere Datenkommunikationsschnittstelle eine Funkverbindung aufbaut.

4. Verfahren nach einem der vorhergehenden Ansprüche, wobei als das zumindest eine Identifikationsmerkmal (30) der zumindest einen Datenkommunikationsschnittstelle (16) eine IP-Adresse und/oder eine MAC-Adresse des Mobilgeräts (12) und/oder des Kraftfahrzeugs (11) verwendet wird.

5. Verfahren nach einem der vorhergehenden Ansprüche, wobei das veränderte Identifikationsmerkmal (30) mittels einer verschlüsselten Information in einem Funksignal (13, 15), insbesondere einem Funksignal für eine vorangegangene Freigabe der Zugangsfunktion oder einem zusätzlichen ersten Funksignal (13, 15) einer aktuellen Funkverbindung, der je anderen Komponente der Schließvorrichtung (10) mittgeteilt wird.

6. Verfahren nach einem der vorhergehenden Ansprüche, wobei als zusätzliche veränderliche Parameter der Funkverbindung eine Sendeleistung und/oder eine Sendefrequenz und/oder eine Empfängerempfindlichkeit verändert werden.

7. Verfahren nach einem der vorhergehenden Ansprüche, wobei zumindest eine Komponente der Schließvorrichtung (10) über zumindest eine Datenkommunikationsschnittstelle (16, 18) zumindest eine weitere elektromagnetische Funkverbindung aufbaut, die unabhängig von der zumindest einen Funkverbindung der Schließvorrichtung (10) ist.

8. Verfahren nach einem der vorhergehenden Ansprüche, wobei zumindest eine der zumindest zwei Datenkommunikationsstellen (16) auch dazu genutzt wird, eine Entfernung und/oder eine Position der Funkschlüsseleinheit (12) zum Kraftfahrzeug (11) mittels einer Empfangsfeldstärkemessung und/oder einer Laufzeitmessung und/oder einer Phasenmessung zu ermitteln, und eine Freigabe der Zugangsfunktion nur dann erfolgt, falls die Entfernung und/oder die Position je in einem vorbestimmten Bereich liegt.

9. Passive funkbasierte Schließvorrichtung (10) für ein Kraftfahrzeug (11), wobei die Schließvorrichtung (10) zumindest zwei Datenkommunikationsschnittstellen (18, 19) aufweist, die dazu ausgestaltet sind zumindest zwei elektromagnetische Funkverbindungen mit einem Mobilgerät (12) aufzubauen, und die Schließvorrichtung (10) ausgebildet ist, ein Verfahren gemäß den vorhergehenden Ansprüchen auszuführen.

## Claims

1. Method for operating a passive radio-based locking apparatus (10) of a motor vehicle (11), which locking apparatus is operated by means of at least two electromagnetic radio connections and can be used to enable at least one access function of the motor vehicle (11), wherein the passive radio-based locking apparatus (10) has, as components, at least one mobile device (12) in the form of a radio key unit and at least two data communication interfaces (18, 19) of the locking apparatus (10) on the motor vehicle (11), between which at least two electromagnetic radio signals (13, 15) are interchanged for the at least two electromagnetic radio connections, and at least one parameter of the at least two radio connections of the locking apparatus (10) is changed in a predetermined manner unknown to a third party for operation, wherein as parameter, temporally before enabling the access function, at least one identification feature (30) each of at least two different data communication interfaces (16) for setting up the radio connections, which are effected in succession, to the at least one radio key unit (12) and/or to the at least two data communication interfaces (18, 19), changes and, for this purpose, is each set to a current value, and the access function is enabled only if the respective identification feature (30) has at least the current value, wherein, during a locking operation, the at least two different data communication interfaces (16, 17) are used to set up at least two different electromagnetic radio connections and the at least two electromagnetic radio connections which differ in terms of their identification feature (30, 31) are effected in a temporally offset manner in a predetermined pattern and/or a different identification feature is used for each data communication interface.

2. Method according to Claim 1, wherein a WLAN interface and/or a Bluetooth interface of each of the mobile device (12) and of the motor vehicle (11) is/are used as data communication interfaces (16).

3. Method according to one of the preceding claims, wherein the at least two radio connections are each set up in succession in a predetermined sequence via the at least two different data communication interfaces (16) or a further data communication interface additionally sets up a radio connection at the same time.

4. Method according to one of the preceding claims, wherein an IP address and/or a MAC address of the mobile device (12) and/or of the motor vehicle (11) is/are used as the at least one identification feature (30) of the at least one data communication interface (16).

5. Method according to one of the preceding claims, wherein the changed identification feature (30) is communicated to the respective other component of the locking apparatus (10) by means of an item of encrypted information in a radio signal (13, 15), in particular a radio signal for previous enabling of the access function or an additional first radio signal (13, 15) of a current radio connection.

6. Method according to one of the preceding claims, wherein a transmission power and/or a transmission frequency and/or a receiver sensitivity is/are changed as additional variable parameters of the radio connection.

7. Method according to one of the preceding claims, wherein at least one component of the locking apparatus (10) sets up at least one further electromagnetic radio connection, which is independent of the at least one radio connection of the locking apparatus (10), via at least one data communication interface (16, 18).

8. Method according to one of the preceding claims, wherein at least one of the at least two data communication interfaces (16) is also used to determine a distance and/or a position of the radio key unit (12) with respect to the motor vehicle (11) by means of a reception field strength measurement and/or a propagation time measurement and/or a phase measurement, and the access function is enabled only if the distance and/or the position is/are each in a predetermined range.

9. Passive radio-based locking apparatus (10) for a motor vehicle (11), wherein the locking apparatus (10) has at least two data communication interfaces (18, 19) which are configured to set up at least two electromagnetic radio connections to a mobile device (12), and the locking apparatus (10) is designed to carry out a method according to the preceding claims.

## Revendications

1. Procédé pour faire fonctionner un dispositif de fermeture (10) radio passif, qui fonctionne au moyen d'au moins deux liaisons radio électromagnétiques, d'un véhicule automobile (11), par lequel au moins une fonction d'accès du véhicule automobile (11) peut être libérée, le dispositif de fermeture (10) radio passif possédant comme composants au moins un appareil mobile (12) configuré en tant qu'unité de clé radio et au moins deux interfaces de communication de données (18, 19) du dispositif de fermeture (10) sur le véhicule automobile (11), entre lesquelles au moins deux signaux radio électromagnétiques (13, 15) sont échangés pour les au moins deux liaisons radio électromagnétiques, et pour le fonctionnement au moins un paramètre des au moins deux liaisons radio électromagnétiques du dispositif de fermeture (10) étant modifié d'une manière prédéterminée, inconnue d'un tiers,
le paramètre modifié et, pour ce faire, respectivement déclaré à une valeur actuelle avant une libération de la fonction d'accès, étant respectivement au moins une caractéristique d'identification (30) d'au moins deux interfaces de communication de données (16) destinées à l'établissement des liaisons radio, qui ont lieu l'une après l'autre, au niveau de l'au moins une unité de clé radio (12) et/ou au niveau des au moins deux interfaces de communication de données (18, 19), et la libération de la fonction d'accès n'ayant lieu que dans le cas où la caractéristique d'identification (30) respective présente au moins la valeur actuelle, les au moins deux interfaces de communication de données (16, 17) différentes étant utilisées pendant une opération de fermeture pour l'établissement d'au moins deux liaisons radio électromagnétiques différentes et les deux liaisons radio électromagnétiques, différentes du point de vue de leur caractéristique d'identification (30, 31), ayant lieu décalées dans le temps selon un modèle prédéterminé et/ou une caractéristique d'identification différente étant respectivement utilisée pour chaque interface de communication de données.

2. Procédé selon la revendication 1, les interfaces de communication de données (16) utilisées étant respectivement une interface WLAN et/ou respectivement une interface Bluetooth de l'appareil mobile (12) et du véhicule automobile (11).

3. Procédé selon l'une des revendications précédentes, au moins deux liaisons radio étant établies respectivement l'une après l'autre dans une séquence prédéterminée par le biais des au moins deux interfaces de communication de données (16) ou une interface de communication de données supplémentaire établit en plus simultanément une liaison radio.

4. Procédé selon l'une des revendications précédentes, l'au moins une caractéristique d'identification (30) utilisée de l'au moins une interface de communication de données (16) étant une adresse IP et/ou une adresse MAC de l'appareil mobile (12) et/ou du véhicule automobile (11).

5. Procédé selon l'une des revendications précédentes, la caractéristique d'identification (30) modifiée étant communiquée à l'autre composant respectif du dispositif de fermeture (10) au moyen d'une information cryptée dans un signal radio (13, 15), notamment un signal radio pour une libération précédente de la fonction d'accès ou un signal radio (13, 15) supplémentaire d'une liaison radio actuelle.

6. Procédé selon l'une des revendications précédentes, une puissance d'émission et/ou une fréquence d'émission et/ou une sensibilité de récepteur étant modifiée en tant que paramètre modifiable supplémentaire de la liaison radio.

7. Procédé selon l'une des revendications précédentes, au moins un composant du dispositif de fermeture (10) établissant, par le biais d'au moins une interface de communication de données (16, 18), au moins une liaison radio électromagnétique supplémentaire, laquelle est indépendante de l'au moins une liaison radio du dispositif de fermeture (10).

8. Procédé selon l'une des revendications précédentes, au moins l'une des au moins deux interfaces de communication de données (16) étant également utilisée pour déterminer une distance et/ou une position de l'unité de clé radio (12) par rapport au véhicule automobile (11) au moyen d'une mesure de l'intensité du champ de réception et/ou d'une mesure du temps de propagation et/ou d'une mesure de phase, et une libération de la fonction d'accès n'ayant lieu que dans le cas où la distance et/ou la position se trouve respectivement dans une plage prédéterminée.

9. Dispositif de fermeture (10) radio passif pour un véhicule automobile (11), le dispositif de fermeture (10) radio passif possédant au moins deux interfaces de communication de données (18, 19) qui sont configurées pour établir au moins deux liaisons radio électromagnétiques avec un appareil mobile (12), et le dispositif de fermeture (10) étant configuré pour mettre en œuvre un procédé selon l'une des revendications précédentes.
